(19) Europäisches Patentamt / European Patent Office / Office européen des brevets

(11) **EP 4 378 318 B1**

(12) **EUROPEAN PATENT SPECIFICATION**

(45) Date of publication and mention
of the grant of the patent:
**02.07.2025 Bulletin 2025/27**

(21) Application number: **22849641.0**

(22) Date of filing: **29.07.2022**

(51) International Patent Classification (IPC):
*A23D 7/005* (2006.01)    *A23J 3/00* (2006.01)
*A23J 3/22* (2006.01)    *A23L 13/00* (2016.01)
*A23L 13/40* (2023.01)    *A23L 29/20* (2016.01)
*A23L 29/256* (2016.01)    *A23D 9/05* (2006.01)
*A23L 29/231* (2016.01)    *A23P 10/30* (2016.01)
*B01J 13/14* (2006.01)

(52) Cooperative Patent Classification (CPC):
**A23J 3/227; A23D 7/005; A23D 7/0053;
A23D 9/05; A23J 3/00; A23J 3/22; A23L 13/00;
A23L 13/40; A23L 13/422; A23L 13/43;
A23L 29/20; A23L 29/231; A23L 29/256;**
A23P 10/35

(86) International application number:
**PCT/JP2022/029398**

(87) International publication number:
**WO 2023/008581 (02.02.2023 Gazette 2023/05)**

(54) **FATTY MASS COMPOSITION AND MEAT ALTERNATIVE**

FETTMASSEZUSAMMENSETZUNG UND FLEISCHALTERNATIVE

COMPOSITION DE MATIÈRE GRASSE ET SUBSTITUT DE VIANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.07.2021 JP 2021126192
28.07.2022 JP 2022120580**

(43) Date of publication of application:
**05.06.2024 Bulletin 2024/23**

(73) Proprietor: **FUJIFILM Corporation
Tokyo 106-8620 (JP)**

(72) Inventor: **MATSUNO, Ryo
Ashigarakami-gun, Kanagawa 258-8577 (JP)**

(74) Representative: **HGF
HGF Limited
1 City Walk
Leeds LS11 9DX (GB)**

(56) References cited:
| | |
|---|---|
| EP-A1- 4 252 548 | WO-A1-2022/114234 |
| WO-A1-98/34501 | CN-A- 111 227 056 |
| JP-A- 2006 050 946 | JP-A- S57 163 469 |
| JP-A- S62 146 584 | US-A1- 2012 183 663 |
| US-A1- 2015 099 053 | |

**Description**

**BACKGROUND OF THE INVENTION**

1. Field of the Invention

The present disclosure relates to a fat lump composition and a meat substitute.

2. Description of the Related Art

The fatty meat contained in the livestock meat has elasticity and has a unique food texture in which the oil and/or fat bleeds out during chewing. In addition, the property of the fatty meat is a factor that greatly affects the food texture, flavor, and the like in a case where the livestock meat is eaten.

In recent years, from the viewpoint of health maintenance, circumstances have been changing such that it is recommended to avoid the dietary intake of livestock meat and to take in a food product for meat (hereinafter, may be referred to as a "meat substitute") in which a vegetable protein derived from a plant, such as a soybean, is used as a raw material. Under such circumstances, in order to make the food texture, flavor, and the like of the meat substitute closer to the livestock meat, attempts have been made to incorporate a food material having a food texture similar to that of fatty meat, into the meat substitute. Along with this, the development of the food material having a food texture similar to that of fatty meat has been carried out.

For example, Patent Document 1 proposes "an oil-in-water type composition containing at least an alkyl cellulose in which a viscosity of a 1% by mass aqueous solution at 20°C measured with a B-type viscometer is 4,000 to 11,000 mPa·s and a storage elastic modulus G' (65°C) of a 1.5% by mass aqueous solution at 65°C is 2,500 to 4,500 Pa; an edible oil and/or fat; and water".

Patent Document 2 proposes "a production method for a marbled meat characterized by dispersing microcapsules with oils and/or fats or seasoned oils and/or fats in water or a liquid in which proteins, polysaccharides, plant fibers, and the like are appropriately dispersed in water, and injecting or inserting the dispersion liquid into meat at a low temperature".

Patent Document 3 proposes "a soybean protein gel food of an oil-in-water type emulsion, which is obtained by subjecting an oil-in-water type emulsified slurry to a gelation treatment, the oil-in-water type emulsified slurry containing 10% to 60% by weight of oil droplets having a particle diameter of 50 $\mu$m to 800 $\mu$m, where in the soybean protein gel food of an oil-in-water type emulsion, a plane occupancy rate of the oil droplet having a diameter of 50 $\mu$m to 800 $\mu$m is 10% to 60%, a gel formed from a non-myosin gelation material is present as a continuous phase, and the gel is a gel obtained by carrying out crosslinking with a protein crosslinking enzyme".

Patent Document 4 proposes "a composition that contains at least one kind of an ionizable emulsification agent or a salt thereof; and an ionic complex that is generated from one or more substances selected from the group consisting of an ionizable polypeptide, a salt thereof, an ionizable hydrocolloid, and a salt thereof, or generated in the presence of a crosslinking agent in a case where the charges on the emulsification agent, the polypeptide, and the hydrocolloid described above have the same sign".

Patent Document 5 proposes "a method of texturing fat, which is used for a meat-like product, which is characterized by; (a) mixing 100 parts of a triglyceride fat and about 2 to about 20 parts of an oil-soluble gelling agent at a temperature higher than a gelation temperature; and (b) cooling the mixture to a temperature lower than the gelation temperature, and stirring the mixture during the cooling to provide irregularly-shaped discrete particles of a gelated fat".

Patent Document 1: JP6446473B
Patent Document 2: JP1987-146584A (JP-S62-146584A)
Patent Document 3: JP6265121B
Patent Document 4: JP1995-502172A (JP-H07-502172A)
Patent Document 5: JP1977-057357A (JP-S52-057357A)

US 2015/0099053 A1 describes a masticable food, composed of an oil-in-water-type emulsion gel which has a shape-retaining property and an oil-holding property before mastication and from which oil and fat oozes during mastication to make swallowing smooth, by using any oil and fat. An oil-in-water-type emulsion gel food containing oil droplets having a particle diameter of 50-800 $\mu$m is used. Preferably, the oil and fat is vegetable oil or fish oil, the food is a heat-sterilized food, and the gel is a soybean protein gel crosslinked by a protein crosslinking enzyme.

EP 4252548 A1 describes edible oil-encapsulating microcapsules having a core portion containing edible oil or fat having a melting point of 30°C or less, and a shell portion encapsulating the core portion and containing an edible and ionically cross-linkable polymer that is cross-linked with a polyvalent cation in which an average particle diameter is 10 μm or more and 300 μm or less, and a coefficient of variation of the number average particle diameter is 30% or less, a dispersion liquid of the edible oil-encapsulating microcapsules, a manufacturing method of the edible oil-encapsulating microcapsules, and meat substitute.

US 2012/0183663 A1 describes an edible oleogel comprising an oil, ethylcellulose and a surfactant is prepared by combining ethylcellulose with an edible oil and a surfactant, and heating the mixture to a temperature above the glass transition temperature of the ethylcellulose. Once the ethylcellulose has fully dissolved and the solution is clear, it is allowed to cool and set as a gel. The resulting oleogel is homogeneous, elastic, substantially anhydrous, and has a gelation temperature below 100° C. It can be used as a fat substitute in foods. Also provided are methods of making the oleogel, and food compositions containing the oleogel.

## SUMMARY OF THE INVENTION

In order to produce a food texture similar to fatty meat, it is preferable that a release amount of oily during chewing is large. However, in the food material in the related art, the release amount of oil is insufficient even though the food texture is similar to that of fatty meat.

Therefore, an object of an aspect of the present disclosure is to provide a fat lump composition and a meat substitute as defined by the claims, which have a large release amount of an oily component in a case of being chewed, as compared with a food material in the related art.

According to the embodiment of the present disclosure, there are provided a fat lump composition and a meat substitute, which have a large release amount of an oily component in a case of being chewed, as compared with a food material in the related art.

DESCRIPTION OF THE PREFERRED EMBODIMENTS

The invention is defined by the claims.

In numerical ranges described in stages in the present specification, an upper limit value or a lower limit value described in one numerical range may be replaced with an upper limit value or a lower limit value of a numerical range described in another stage. In addition, with regard to the numerical value ranges described in the present specification, the upper limit value or the lower limit value of the numerical value range may be replace with the values disclosed in Examples.

Each component may contain a plurality of kinds of substances corresponding thereto.

In a case where the amount of each component in a composition is referred to, and in a case where a plurality of substances corresponding to each component in the composition are present, it means the total amount of a plurality of substances present in the composition, unless otherwise specified.

In the present specification, the term "step" includes not only an independent step but also a step that cannot be clearly distinguished from other steps, as long as the intended purpose of the step is achieved.

In the present specification, a combination of two or more preferred aspects is a more preferred aspect.

<Fat lump composition>

A fat lump composition according to the present disclosure contains a granular body that contains an oil and/or fat having a melting point of 0.1°C or higher and an edible and ionically crosslinkable polymer that is crosslinked with a cation.

In addition, in the fat lump composition according to the present disclosure, an average particle diameter of the granular bodies is 50 μm or more and 500 μm or less.

With the above-described configuration, the fat lump composition according to the present disclosure has a large release amount of the oily component in a case of being chewed. The reason therefor is presumed as follows.

The fatty meat contained in the livestock meat is constituted to contain a large number of adipocytes containing oil and/or fat in the side thereof. As a result, the fatty meat contained in the livestock meat is in a state close to a state of containing a large number of oil droplets. Since the fat lump composition according to the present disclosure contains a granular body containing an oil having a melting point of 0.1°C or higher, the structure of the fat lump composition is similar to a structure of fatty meat contained in the livestock meat. As a result, similarly to a case of the fatty meat of the livestock meat during chewing, the fat lump composition according to the present disclosure easily releases the oily component from the fat lump composition. In addition, in the fat lump composition according to the present disclosure, an average particle diameter of the granular bodies is 50 μm or more and 500 μm or less.

A granular body having a small particle diameter contains a small amount of the oil and/or fat encompassed therein. Therefore, in a case where a granular body having a small particle diameter is contained, the release amount of the oily component in a case where the fat lump composition is chewed tends to be small. On the other hand, a granular body having a large particle diameter is unstable, and thus the oil and/or fat easily leaks from the granular body in a case of carrying out cooking such as heat cooking. As a result, in a case where the average particle diameter of the granular bodies is within the numerical value range described above, the amount of the oil and/or fat contained in the fat lump composition tends to be large. Therefore, the release amount of the oily component in a case where the fat lump composition is chewed is easily improved.

In addition, since the fat lump composition according to the present disclosure contains an edible and ionically crosslinkable polymer that is crosslinked with a cation, it is possible to maintain the granular body contained in the fat lump composition at a preferred particle diameter. Further, elasticity is imparted to the fat lump composition, and thus the food texture tends to be closer to the fatty meat of the meat of the livestock meat.

Therefore, the fat lump composition according to the present disclosure is conceived to have a large release amount of the oily component in a case of being chewed as compared with the food material in the related art.

(Granular body)

The granular body contains an oil and/or fat having a melting point of 0.1°C or higher (hereinafter, also simply referred to as a "specific oil and/or fat").

In addition, the average particle diameter of the granular bodies is 50 μm or more and 500 μm or less.

- Composition of granular body -

The granular body contains an oil and/or fat having a melting point of 0.1°C or higher and contains water and other additives as necessary.

· Oil and/or fat

Examples of the oil and/or fat contained in the granular body, which has a melting point of 0.1°C or higher, include a vegetable oil and/or fat, an animal oil and/or fat, a fatty acid.

Here, the fatty acid is a monovalent carboxylic acid of a long-chain hydrocarbon and is represented by a general formula $C_nH_mCOOH$ (n and m are an integer of 1 or more).

Examples of the vegetable oil include rapeseed oil, soybean oil, palm oil, olive oil, coconut oil, rice oil, corn oil, coconut oil, and canola oil.

Examples of the animal oil and/or fat include bovine fat, porcine fat, lard, blubber, and fish oil.

Examples of the fatty acid include saturated fatty acids such as lauric acid, stearic acid, isostearic acid, palmitic acid, myristic acid, arachidic acid, and behenic acid; and unsaturated fatty acids such as oleic acid, linoleic acid, α-linolenic acid, eicosenoic acid, and erucic acid.

From the viewpoint of increasing the release amount of the oily component in a case where the fat lump composition is chewed, the oil and/or fat contained in the granular body is preferably the oil and/or fat is at least one selected from coconut oil, olive oil, palm oil, canola oil, or oleic acid.

The oil and/or fat has a melting point of 0.1°C or higher. Therefore, in a case where the oil and/or fat is used, the granular body is more easily formed in the production of the fat lump composition described later. Therefore, it is easy to increase the release amount of the oily component in a case where the fat lump composition is chewed.

The melting point of the oil and/or fat is 0.1°C or higher; however, it is preferably 1°C or higher and 30°C or lower, more preferably 2°C or higher and 25°C or lower, and still more preferably 5°C or higher and 25°C or lower.

In a case of setting the melting point of the oil and/or fat to 1°C or higher, the granular body is more easily formed in the production of the fat lump composition described later.

In addition, in a case of setting the melting point of the oil and/or fat to 30°C or lower, it is easy to produce the fat lump composition containing water in the granular body at room temperature (for example, 25°C) in the production of the fat lump composition described later, and the production step is likely to be simple.

The melting point of the oil and/or fat is measured in accordance with "Standard Methods for the Analysis of Fats, Oils, and Related Materials 2.2.4.2 (1996), 1996 edition", enacted by the Japan Oil Chemists' Society"

The content of the oil and/or fat is preferably 10% by mass or more and 98% by mass or less, more preferably 20% by mass or more and 95% by mass or less, and still more preferably 25% by mass or more and 90% by mass or less, with respect to the entire fat lump composition.

· Water

Depending on the application, it may be preferable that the granular body contains water.

The water may be any water that can be used for a food product and is not particularly limited.

In a case where the granular body contains water, the water is also released from the fat lump composition in addition to the oil and/or fat in a case where the fat lump composition is chewed, which may easily make the food texture closer to that of the fatty meat contained in the livestock meat.

In addition, in a case where the granular body contains water, it is easy to incorporate water-soluble components (for example, a seasoning such as a palatable ingredient, and a flavoring agent) into the granular body, and it is easier to produce a food texture similar to that of the fatty meat contained in the livestock meat.

The content of the water is preferably 1% by mass or more and 90% by mass or less, more preferably 5% by mass or more and 70% by mass or less, and still more preferably 10% by mass or more and 50% by mass or less with respect to the amount of the specific oil and/or fat contained in the granular body.

· Other additives

Examples of other additives include a seasoning, an acidulant, a bittering agent, a spice, a sweetener, an antioxidant, a coloring agent, a color developing agent, a flavoring agent, a stabilizer, and a preservative.

The content of the other additives is preferably 0% by mass or more and 5% by mass or less with respect to the entire granular body.

- Characteristics of granular body -

· Average particle diameter of granular bodies

The average particle diameter of the granular bodies is 50 $\mu$m or more and 500 $\mu$m or less; however, it is preferably 50 $\mu$m or more and 400 $\mu$m or less and more preferably 90 $\mu$m or more and 300 $\mu$m or less.

In a case of setting the average particle diameter of the granular bodies to 50 $\mu$m or more, the release amount of the oily component in a case where the fat lump composition is chewed is easily improved as described above.

In addition, in a case of setting the average particle diameter of the granular bodies to 500 $\mu$m or less, the particle diameter of the granular body is reduced. Therefore, in a case where the fat lump composition is visually observed, it is difficult to be visible that a large number of granular bodies are contained in the fat lump composition. Therefore, the appearance of the fat lump composition is also closer to that of the fatty meat contained in the livestock meat.

Further, in a case of setting the average particle diameter of the granular bodies to 500 $\mu$m or less, the particle diameter of the granular body is reduced, and thus the feeling on the tongue in a case of eating the fat lump composition tends to be smooth. Therefore, the food texture of the fat lump composition tends to be better.

The average particle diameter of the granular bodies is measured by observing the fat lump composition with a transmission optical microscope.

As the transmission microscope, it is possible to use, for example, an inverted microscope Axio Observer. Z1.

Hereinafter, a measurement procedure for the average particle diameter of the granular bodies will be described.

A fat lump composition is immersed in an aqueous solution of 100 mM ethylenediamine-N,N,N',N'-sodium tetraacetate (manufactured by FUJIFILM Wako Pure Chemical Corporation) for 1 hour. Granular bodies that have floated after 1 hour are subjected to specific gravity separation, thereby being recovered from the fat lump composition, and the recovered granular bodies are placed on a 60 mm$\Phi$ polystyrene petri dish. In this case, caution is paid such that the recovered granular bodies do not overlap in the depth direction of the petri dish. Then, the granular bodies recovered in the petri dish are observed with a transmission optical microscope and imaged at an objective magnification of 5 times. 200 or more images of granular bodies included in a screen obtained by the imaging are selected. The equivalent circle diameter of each granular body (a diameter of a perfect circle corresponding to the area of the image of the granular body) is calculated using image processing software (for example, ImageJ). An arithmetic average value of the calculated equivalent circle diameters of the respective granular bodies is calculated, and the arithmetic average value thereof is defined as the average particle diameter of the granular bodies.

· CV value of particle diameter of granular body

The coefficient of variation (CV) value of the particle diameter of the granular body is preferably 30% or less, more preferably 25% or less, and still more preferably 20% or less.

A granular body having a small particle diameter contains a small amount of the oil and/or fat encompassed therein. Therefore, in a case where a granular body having a small particle diameter is contained, the release amount of the oily component in a case where the fat lump composition is chewed tends to be small. On the other hand, a granular body having a large particle diameter is unstable, and thus the oil and/or fat easily leaks from the granular body in a case of carrying out cooking such as heat cooking.

From the description described above, it is preferable that the variation in the particle diameter of the granular body is small in order to obtain a fat lump composition having a large release amount of an oily component in a case of being chewed, where the fat lump composition is stably maintained during storage while containing a large amount of the oil and/or fat. That is, it is preferable that the particle diameter distribution of the granular body contained in the fat lump composition is narrow.

In a case of setting the CV value of the particle diameter of the granular body to 30% or less, the granular body contained in the fat lump composition tends to be a state in which the particle diameter thereof is close to uniform. Therefore, it is easy to obtain a fat lump composition having a large release amount of an oily component in a case of being chewed.

The CV value of the particle diameter is a value obtained according to the following expression.

Expression: CV value (%) of particle diameter = (standard deviation of equivalent circle diameter of granular body/average particle diameter of granular body) $\times$ 100

Here, the average particle diameter of the granular bodies is a value measured by the method described above.

In addition, the standard deviation of the equivalent circle diameter of the granular body is the standard deviation of the equivalent circle diameters of 200 granular bodies, which is calculated in the measurement of the average particle diameter of the granular bodies.

(Ionically crosslinkable polymer)

The fat lump composition contains an edible and ionically crosslinkable polymer that is crosslinked with a cation.

Here, "edible" means having a property which does not adversely affect a health condition in a case where a substance is orally subjected to dietary intake by a human.

The "ionically crosslinkable polymer" means a polymer which is crosslinked by a reaction with an ion.

Examples of the edible and ionically crosslinkable polymer include polysaccharides having at least one kind of group selected from the group consisting of a carboxy group, a carboxylate anion group ($-COO^-$), a sulfo group, and a sulfonate anion group ($-SO_3^-$).

Examples of the edible and ionically crosslinkable polymer include alginic acid, carrageenan, LM pectin, HM pectin, and LA gellan gum.

From the viewpoint of improving the heat resistance of the fat lump composition, the edible and ionically crosslinkable polymer is preferably at least one selected from the group consisting of alginic acid, LM pectin, and LA gellan gum.

The viscosity of the aqueous solution of 1% by mass of the edible and ionically crosslinkable polymer (the aqueous solution containing 1% by mass of the ionically crosslinkable polymer with respect to the entire aqueous solution) is preferably 10 mPa·s or more and 3,000 mPa·s or less, and more preferably 20 mPa·s or more and 1,000 mPa·s or less.

The viscosity of the aqueous solution of 1% by mass of the edible and ionically crosslinkable polymer is a value measured with a tuning fork vibration type viscometer under a temperature condition of 20°C.

As the tuning fork vibration type viscometer, it is possible to use, for example, SV-10 manufactured by A&D Company, Limited.

The cation is preferably a metal ion having an ion valence of 2 or more.

Examples of the metal ion include divalent metal ions such as a calcium ion, a magnesium ion, an iron ion (II), a copper ion (II), a zinc ion, and a manganese ion, and trivalent metal ions such as an aluminum ion and an iron ion (III).

From the viewpoint of obtaining a stable crosslinking structure, the metal ion is preferably at least one selected from a calcium ion, a magnesium ion, or a zinc ion, and more preferably a calcium ion.

The content of the edible and ionically crosslinkable polymer that is crosslinked with a cation is preferably 0.01% by mass or more and 20% by mass or less, more preferably 0.1% by mass or more and 10% by mass or less, and still more preferably 0.5% by mass or more and 5% by mass or less, with respect to the entire fat lump composition.

(Surfactant)

The fat lump composition of the invention contains a surfactant as claimed.

When the fat lump composition contains a surfactant as claimed, the release amount of the oil and/or fat is further increased when where the fat lump composition after heat cooking is chewed. The reason therefor is presumed as follows.

When the granular bodies in the fat lump composition are in contact with each other, the oil and/or fat easily leaks from the granular bodies during heat cooking. As a result, the release amount of the oil and/or fat is easily reduced in a case where the fat lump composition after heat cooking is chewed.

When a surfactant is contained, the compatibility between the granular bodies and the ionically crosslinkable polymer is likely to be favorable, and the ionically crosslinkable polymer is likely to be present in the gaps between the granular bodies. As a result, the granular bodies tend to be appropriately spaced from each other, and the leakage of the oil and/or fat from the granular bodies during heat cooking is suppressed. As a result, the release amount of the oil and/or fat in a case where the fat lump composition after heat cooking is chewed is increased.

Examples of the surfactant include an edible surfactant.

Examples of the edible surfactant include a glycerin fatty acid ester, a polyglycerin fatty acid ester, an organic acid monoglyceride, a sorbitan fatty acid ester, a propylene glycol fatty acid ester, a sucrose fatty acid ester, a polyglycerin condensed ricinoleic acid ester, and lecithin.

The glycerin fatty acid ester preferably contains monoglyceride as a main component.

Here, the main component refers to that the content of monoglyceride is 90% by mass or more with respect to the entire glycerin fatty acid ester.

The monoglyceride is preferably a monoesterified product of a saturated or unsaturated fatty acid having 2 to 24 carbon atoms and glycerin.

Examples of the fatty acid include behenic acid, stearic acid, and palmitic acid.

The glycerin fatty acid ester may contain diglyceride.

The diglyceride is preferably a diesterified product of a saturated or unsaturated fatty acid having 2 or more and 24 or less carbon atoms and glycerin.

The polyglycerin fatty acid ester is preferably an esterified product of a saturated or unsaturated fatty acid having 2 or more and 24 or less carbon atoms and polyglycerin.

Specific examples of the polyglycerin fatty acid ester include polyglyceryl monomyristate, polyglyceryl dimyristate, polyglyceryl trimyristate, polyglyceryl monopalmitate, polyglyceryl dipalmitate, polyglyceryl tripalmitate, polyglyceryl monostearate, polyglyceryl distearate, polyglyceryl tristearate, polyglyceryl monoisostearate, polyglyceryl diisostearate, polyglyceryl triisostearate, polyglyceryl monooleate, polyglyceryl dimonooleate, and polyglyceryl trimonooleate.

The organic acid monoglyceride is obtained by further esterifying a hydroxyl group derived from glycerin of monoglyceride by using an organic acid.

Examples of the organic acid include citric acid, succinic acid, acetic acid, and lactic acid, where citric acid and succinic acid are preferable, and citric acid is more preferable.

The sorbitan fatty acid ester refers to an esterified product of sorbitan and a fatty acid.

The sorbitan fatty acid ester is preferably an esterified product of sorbitan and a saturated or unsaturated fatty acid having 2 or more and 18 or less carbon atoms.

Specific examples of the sorbitan fatty acid ester include sorbitan monocaprate, sorbitan monolaurate, sorbitan monopalmitate, sorbitan monostearate, sorbitan distearate, sorbitan sesquistearate, sorbitan tristearate, sorbitan trioleate, sorbitan monoisostearate, sorbitan sesquiisostearate, sorbitan monooleate, sorbitan sesquioleate, and sorbitan of coconut oil fatty acid.

The propylene glycol fatty acid ester is an esterified product of a fatty acid and propylene glycol.

The fatty acid that is used for the synthesis of the propylene glycol fatty acid ester is preferably a saturated or unsaturated fatty acid having 2 or more and 24 or less carbon atoms.

Specific examples of the propylene glycol fatty acid ester include a propylene glycol palmitic acid ester, a propylene glycol stearic acid ester, and a propylene glycol behenic acid ester.

The sucrose fatty acid ester is an esterified product of sucrose and a fatty acid.

The fatty acid that is used for the synthesis of the sucrose fatty acid ester is preferably a saturated or unsaturated fatty acid having 2 or more and 24 or less carbon atoms.

The sucrose fatty acid ester is preferably an esterified product of one or two or more fatty acids selected from the group consisting of caprylic acid, capric acid, lauric acid, myristic acid, palmitic acid, palmitoleic acid, stearic acid, oleic acid, arachidic acid, and behenic acid, and sucrose.

The polyglycerin condensed ricinoleic acid ester is an esterified product of a polyglycerin fatty acid ester and a ricinoleic acid condensate.

Specific examples of the polyglycerin condensed ricinoleic acid ester include an esterified product of the compound described as a specific example of the polyglycerin fatty acid ester described above and a ricinoleic acid condensate.

The lecithin refers to phosphatidylcholine itself or a mixture containing at least phosphatidylcholine.

The mixture containing at least phosphatidylcholine is generally a mixture that can contain, in addition to phosphatidylcholine, phosphatidylserine, phosphatidylethanolamine, phosphatidylinositol, N-acylphosphatidylethanolamine, phosphatidylglycerol, phosphatidic acid, lysophosphatidylcholine, lysophosphatidic acid, sphingomyelin, sphingoethanolamine, and the like.

As the lecithin, it is possible to use an enzymatically degraded lecithin (so-called lysolecithin).

The enzymatically degraded lecithin is a composition containing lysophosphatidylcholine in which one fatty acid of the phosphatidylcholine molecule is lost by an enzyme such as phospholipase. It is noted that in the fat lump composition of the present disclosure, the enzymatically degraded lecithin includes a hydrogenated and enzymatically degraded lecithin, which has undergone a hydrogenation treatment to convert a bound fatty acid into a saturated fatty acid, thereby having improved oxidation stability.

One kind of the surfactant may be used alone, or two or more kinds thereof may be used in combination.

From the viewpoint of emulsification dispersibility, the HLB value of the surfactant is, for example, preferably 8 or more, more preferably 10 or more, and still more preferably 12 or more.

The upper limit of the HLB value of the emulsification machine is not particularly limited; however, it is generally 20 or less and preferably 18 or less.

HLB generally means the hydrophilic-hydrophobic balance, which is a term that is used in the field of surfactant. The HLB value is calculated using the Kawakami equation shown below. It is noted that in a case where a commercially available product is used as the surfactant, the commercially available catalog data is preferentially adopted.

$$HLB = 7 + 11.7\log(Mw/Mo)$$

Here, Mw indicates a molecular weight of a hydrophilic group of a surfactant, and Mo indicates a molecular weight of the hydrophobic group of the surfactant.

The hydrophobic group of the surfactant is an atomic group having a low affinity to water. Examples of the hydrophobic group include an alkyl group, an alkenyl group, an alkylsilyl group, and a perfluoroalkyl group. Specifically, it refers to an alkyl group or an alkenyl group, which is derived from a fatty acid, in a case where the surfactant is "a glycerin fatty acid ester, a polyglycerin fatty acid ester, an organic acid monoglyceride, a sorbitan fatty acid ester, a propylene glycol fatty acid ester, a sucrose fatty acid ester, a polyglycerin condensed ricinoleic acid ester, or lecithin", which is described above.

The hydrophilic group of the surfactant is an atomic group having a high affinity to water. Specifically, it refers to an atomic group other than the hydrophobic group in the structure of the surfactant.

In the invention as claimed the HSP distance between the ionically crosslinkable polymer and the hydrophilic moiety of the surfactant is 10 or less, more preferably 9 or less, and still more preferably 8 or less.

In a case where the granular bodies in the fat lump composition are in contact with each other, the oil and/or fat easily leaks from the granular bodies during heat cooking. As a result, the release amount of the oil and/or fat is easily reduced in a case where the fat lump composition after heat cooking is chewed.

In a case where the HSP distance between the ionically crosslinkable polymer and the hydrophilic moiety of the surfactant is within the numerical range described above, the ionically crosslinkable polymer is likely to be present in the gaps between the granular bodies. As a result, the granular bodies tend to be appropriately spaced from each other, and the oil and/or fat hardly leaks from the granular bodies during heat cooking. Along with this, the release amount of the oil and/or fat in a case where the fat lump composition after heat cooking is chewed is increased.

The HSP distance can be adjusted by changing the structure of the hydrophilic moiety of each of the ionically crosslinkable polymer and the surfactant.

The HSP distance is obtained by combining three kinds of cohesive energy density values ($\delta$D: dispersion parameter, $\delta$P: polar parameter, and $\delta$H: hydrogen-bonding parameter), and the unit each of them is $[J/cm^3]^{1/2}$.

The HSP distance is calculated as follows.

The HSP distance can be acquired as a registered value or an estimated value in HSPiP 4th Edition, version 4.0.04, which is commercially available software.

This software is available from a site such as http://hansen-solubility.com/index.html". In addition, a document by Hansen et al. (for example, C. M. Hansen solubility parameters: a user's handbook, 2nd edition, CEC press, 2007, ISBN-10: 0849372488) can be referenced in order to determine HSP based on such software.

The content of the surfactant with respect to the entire fat lump composition is preferably 0.05% by mass or more and 2% by mass or less, and more preferably 0.10% by mass or more and 1% by mass or less.

(Gel containing edible and ionically crosslinkable polymer that is crosslinked with cation)

The fat lump composition contains a gel containing an edible and ionically crosslinkable polymer that is crosslinked with a cation.

The gel contains at least water and an edible and ionically crosslinkable polymer that is crosslinked with a cation, and it exhibits a behavior as an elastic solid.

When the fat lump composition contains the gel, it is easier to maintain a state in which the granular bodies tend to be appropriately spaced from each other. Therefore, the oil and/or fat further hardly leaks from the granular bodies during heat cooking. Along with this, the release amount of the oil and/or fat in a case where the fat lump composition after heat cooking is chewed tends to be increased.

The gel contains at least an edible and ionically crosslinkable polymer crosslinked with a cation, and water, and it more preferably contains other additives, as necessary, in addition to the edible and ionically crosslinkable polymer crosslinked with a cation and the water.

As the edible and ionically crosslinkable polymer crosslinked with a cation, which is contained in the gel, the above-described edible ionically crosslinkable polymer that is crosslinked with a cation is applied.

The water contained in the gel is not particularly limited as long as it is water that can be used for a food product.

Examples of the other additives contained in the gel include a seasoning, an acidulant, a bittering agent, a spice, a sweetener, an antioxidant, a coloring agent, a color developing agent, a flavoring agent, a stabilizer, and a preservative.

In the gel, the content of the edible and ionically crosslinkable polymer that is crosslinked with a cation is preferably 0.1% by mass or more and 10% by mass or less, more preferably 0.2% by mass or more and 5% by mass or less, and still more preferably 0.5% by mass or more and 3% by mass or less, with respect to the entire gel.

The content of the other additives in the gel is preferably 0% by mass or more and 20% by mass or less with respect to the entire gel.

According to the invention as claimed the volume of the gel with respect to the volume of the granular body is 10% or more and 300% or less, more preferably 30% or more and 200% or less, and still more preferably 50% or more and 150% or less.

The volume of the gel with respect to the volume of the granular body is measured as follows.

First, a volume of a fat lump composition is measured using a laser volume meter. As the laser volume meter, it is possible to use, for example, VL-300 manufactured by KEYENCE CORPORATION.

Then, according to the procedure described in the measurement procedure for the average particle diameter of granular bodies, granular bodies are recovered from the fat lump composition and the recovered granular bodies are allowed to stand under the condition of 50°C for 1 hour to be combined, followed by being measured with a volume meter. For example, a graduated cylinder can be used as the volume meter.

The volume of the gel with respect to the volume of the granular body is determined according to the following expression.

Expression: Volume of gel with respect to volume of granular body = [(volume ($m^3$) of fat lump composition - volume ($m^3$) of granular body)/volume ($m^3$) of fat lump composition] $\times$ 100

(Liquid leakage amount ratio)

In a case where a fat lump composition having a thickness of 2 mm, a ratio of vertical length:lateral length = 1:1, and a weight of 2 g is heated for 5 minutes on a hot plate at 90°C and subsequently, pressurized from a surface of the fat lump composition after heating at a pressure of 200 g/cm$^2$ for 1 minute in a thickness direction, an amount of a liquid released from the fat lump composition after heating (hereinafter, also simply referred to as a "liquid leakage amount ratio during pressurization - 1") is preferably 30% by mass or more with respect to an amount of the oil and/or fat contained in the fat lump composition before heating, in a case where the fat lump composition after heating is pressurized.

In a case where a fat lump composition having a thickness of 2 mm, a ratio of vertical length:lateral length = 1:1, and a weight of 2 g is heated for 5 minutes on a hot plate at 90°C and subsequently, pressurized from a surface of the fat lump composition after heating at a pressure of 300 g/cm$^2$ for 1 minute in a thickness direction, an amount of a liquid released from the fat lump composition after heating (hereinafter, also simply referred to as a "liquid leakage amount ratio during pressurization - 2") is more preferably 30% by mass or more with respect to an amount of the oil and/or fat contained in the fat lump composition before heating, in a case where the fat lump composition after heating is pressurized.

In a case of setting the "liquid leakage amount ratio - 1" during pressurization and the "liquid leakage amount ratio - 2" during pressurization to 30% by mass or more, it is easy to obtain a fat lump composition having a larger release amount of an oily component in a case of being chewed.

From the viewpoint of obtaining a fat lump composition having a larger release amount of an oily component in a case of being chewed, the "liquid leakage amount ratio - 1" during pressurization and the "liquid leakage amount ratio - 2" during pressurization are preferably set to 40% by mass or more and 90% by mass.

Hereinafter, a description will be made in detail for the measurement procedure for the "liquid leakage amount ratio - 1" during pressurization and the "liquid leakage amount ratio - 2" during pressurization (hereinafter, the "liquid leakage amount ratio - 1" during pressurization and the "liquid leakage amount ratio - 2" during pressurization are also referred to as, collectively, a "liquid leakage amount ratio during pressurization").

· Outline of measurement procedure

A measurement procedure for the liquid leakage amount ratio during pressurization goes through four steps of (1) test piece cutting step, (2) drying step, (3) heating step, and (4) pressurization step.

Then, the calculation of the liquid leakage amount ratio during pressurization can be carried out according to the following expression using "the amount of the oil and/or fat contained in the test piece before treatment" calculated in the (2) drying step, and "the liquid leakage amount during pressurization" calculated in the (4) pressurization step.

Expression: ("Liquid leakage amount during pressurization"/"amount of oil and/or fat contained in test piece

before treatment") $\times$ 100

· Specific description of measurement procedure

Hereinafter, a measurement procedure for the liquid leakage amount ratio during pressurization will be specifically described.

(1) Test piece cutting step

Two fat lump compositions (hereinafter, also referred to as test pieces) having a thickness of 2 mm, a ratio of vertical length:lateral length = 1:1, and a weight of 2 g are cut out from a fat lump composition.

(2) Drying step

One of the two test pieces is dried in an oven at 80°C (oven: DG400, manufactured by Yamato Scientific Co., Ltd.) for 2 days, and then the mass thereof is weighed. The amount of change in mass from the initial mass (that is, 2 g) of the test piece corresponds to the moisture content in the test piece. Then, the content of each of the surfactant and the edible and ionically crosslinkable polymer crosslinked with a cation, which are contained in the test piece, is calculated from the calculated moisture content. A difference between the initial mass of the test piece and the calculated contents of the water, the surfactant, and the edible and ionically crosslinkable polymer crosslinked with a cation [that is, "initial mass of test piece - (content of water + content of surfactant + content of edible and ionically crosslinkable polymer crosslinked with cation") is calculated, and the value of the difference therebetween is defined as "the amount of oil and/or fat contained in the test piece before treatment".

(3) Heating step

Next, the remaining one of the two test pieces is placed on a slide glass (S2441, manufactured by Matsunami Glass Ind., Ltd.). In this case, caution is paid such that the thickness direction of the test piece is set to be perpendicular to the surface of the slide glass. Heating is carried out through the slide glass with a hot plate (DP-1S, manufactured by AS ONE Corporation) at 90°C for 5 minutes. The surface of the heated test piece is wiped with Kimwipes (registered trade name, manufactured by NIPPON PAPER CRECIA Co., Ltd., the same applies hereinafter). In this case, the wiping is carried out until the mass of the Kimwipes before and after wiping is not changed. Here, the test piece after the wiping is referred to as a "test piece after heating". Then, the mass of the test piece after heating is weighed. A difference from the initial mass (that is, 2 g) of the test piece (that is, "initial mass of test piece - mass of test piece after wiping") is calculated, and the difference therefrom is defined as "the liquid leakage amount during heating".

(4) Pressurization step

Subsequently, pressurization is carried out for 1 minute from the surface of the test piece after heating in the thickness direction. In this case, in the measurement of the "liquid leakage amount ratio - 1" during pressurization, pressurization is carried out at a pressure of 200 g/cm$^2$ for 1 minute (for example, an SUS weight of a size of 25 mm square and a weight of 200 g is placed on the surface of the test piece after heating, and allowed to stand for 1 minute). On the other hand, in the measurement of the "liquid leakage amount ratio - 2" during pressurization, pressurization is carried out at a pressure of 300 g/cm$^2$ for 1 minute (for example, an SUS weight of a size of 25 mm square and a weight of 1,875 g is placed on the surface of the test piece after heating, and allowed to stand for 1 minute). The surface of the pressurized test piece is wiped with Kimwipes. In this case, the wiping is carried out until the mass of the Kimwipes before and after wiping is not changed. Here, the test piece after wiping is referred to as a "test piece after pressurization". The mass of the test piece after pressurization is weighed, a difference between the mass of the test piece after heating and the mass of the test piece after pressurization ("mass of test piece after heating - mass of test piece after pressurization") is calculated, and the difference therebetween is defined as "the liquid leakage amount during pressurization".

In addition, a value obtained by calculating ("amount of liquid leakage during pressurization"/"amount of oil and/or fat contained in test piece before treatment") $\times$ 100 is defined as "the liquid leakage amount ratio during pressurization".

It is noted that the "liquid leakage amount ratio during heating" calculated in Examples described later shall be a value obtained by calculating ("amount of liquid leakage during heating"/"amount of oil and/or fat contained in test piece before treatment") $\times$ 100.

(Shape of fat lump composition)

A shape of the fat lump composition is not particularly limited. However, it is preferable that the shape thereof has a sheet shape and has a thickness is 0.5 mm or more from the viewpoint of increasing the release amount of the oily component in a case where the fat lump composition is chewed.

Here, the phrase "having a sheet shape" means having a shape in which the thickness is small with respect to vertical and lateral lengths.

Although dependent on the method of use, the thickness of the sheet-shaped fat lump composition is preferably 1 mm or more from the viewpoint of further increasing the release amount of the oily component in a case where the fat lump composition is chewed.

From the viewpoint of ease of production of the fat lump composition, the thickness of the sheet-shaped fat lump composition is more preferably set to 50 mm or less, still more preferably set to 10 mm or less, even still more preferably set to 5 mm or less.

The thickness of the sheet-shaped fat lump composition is measured with a noncontact thickness meter.

As the thickness meter, it is possible to use, for example, "TAP-2H-50XY" (product name, manufactured by COMS Co., Ltd.).

(Production method for fat lump composition)

A production method for the fat lump composition preferably includes;

(1) step of forming liquid droplets containing an oil and/or fat in an aqueous solution (a liquid droplet forming step);
(2) step of solidifying the oil and/or fat in the liquid droplets to obtain particles containing the solidified oil and/or fat (an oil and/or fat solidification step); and
(3) step of adding an aqueous solution containing an edible and ionically crosslinkable polymer and an aqueous solution containing a cation to the particles and crosslinking the edible and ionically crosslinkable polymer (a crosslinking step).

(1) Liquid droplet forming step

Examples of the method of forming liquid droplets containing an oil and/or fat in an aqueous solution include a method of dispersing an oil and/or fat in an aqueous solution.

The method of dispersing an oil and/or fat in an aqueous solution is preferably a method of emulsifying an aqueous solution and an oil and/or fat using an emulsification machine.

It is noted that an oil and/or fat having a melting point of 0. 1°C or higher is applied.

Examples of the emulsification machine include a rotary stirrer equipped with a stirring blade of a propeller type, an anchor type, a paddle type, or a turbine type, a stationary mixer such as a static mixer, a rotor/stator type emulsification machine such as a homogenizer or CLEARMIX, a high-pressure emulsification machine such as a mill type emulsification machine having a grinding function or a Manton Gaulin type pressure emulsification machine, a high-pressure nozzle type emulsification machine that generates cavitation under high pressure, a high-pressure collision type emulsification machine such as a microfluidizer, which applies shear force by colliding liquids with each other under high pressure, an ultrasonic emulsification machine that generates cavitation with an ultrasonic wave, and a membrane emulsification machine that carries out uniform emulsification through pores.

From the viewpoint of improving the uniformity of the particle diameter of the liquid droplets containing an oil and/or fat, it is preferable to use a membrane emulsification machine as the emulsification machine.

In a case of carrying out emulsification using a membrane emulsification machine, the emulsification method may be any one of a direct membrane emulsification method or a permeable membrane emulsification method; however, it is preferably a direct membrane emulsification method.

As the porous membrane that is included in the membrane emulsification machine, for example, a Shirasu Porous Glass (SPG) membrane is suitable. The SPG membrane can be purchased from, for example, SPG Technology Co., Ltd.

The emulsification method that uses a membrane emulsification machine is, for example, preferably a method in which an oil and/or fat is dispersed through a porous membrane in an aqueous solution containing water and a surfactant.

The mass ratio of the aqueous solution used for emulsification to the oil and/or fat (mass of aqueous solution/mass of oil and/or fat) is preferably 10/1 or more and 2/1 or less.

(2) Oil and/or fat solidification step

Examples of the method of solidifying an oil and/or fat in liquid droplets to obtain particles containing the solidified oil and/or fat include a method of carrying out curing using an oil curing agent and a method of cooling liquid droplets containing an oil and/or fat. However, from the viewpoint of obtaining a fat lump composition having a large release amount of an oily component in a case of being chewed, a method of cooling liquid droplets containing an oil and/or fat is preferable.

Examples of the method of cooling liquid droplets containing an oil and/or fat include a method of cooling an aqueous solution containing liquid droplets containing an oil and/or fat, where the liquid droplets are obtained by the (1) step of forming liquid droplets containing an oil and/or fat in an aqueous solution.

The cooling temperature is preferably higher than 0°C and equal to or lower than the melting point of the oil and/or fat.

The cooling time is not particularly limited, and it is preferable to carry out cooling until the oil and/or fat contained in the liquid droplet is solidified.

After cooling, particles containing the solidified oil and/or fat may accumulate in the supernatant of the solution, and in that case, it is preferable to recover the supernatant containing particles. Then, it is preferable to carry out the following crosslinking step using the supernatant containing the recovered particles.

Examples of the method of recovering the supernatant containing particles include a method of discharging an aqueous solution other than the supernatant containing particles, by using a separatory funnel.

The content of the oil and/or fat in the aqueous solution containing the particles obtained by the oil and/or fat solidification step is preferably 40% by mass or more and 90% by mass or less with respect to the entire solution.

(3) Crosslinking step

This is a step of adding an aqueous solution containing an edible and ionically crosslinkable polymer and an aqueous solution containing a cation to the particles obtained by the oil and/or fat solidification step, and crosslinking the edible and ionically crosslinkable polymer.

Specific examples of the crosslinking step include a method of adding an aqueous solution containing an edible and ionically crosslinkable polymer to the aqueous solution containing the particles obtained by the oil and/or fat solidification step, carrying out stirring, and then adding subsequently an aqueous solution containing a cation to crosslink the edible and ionically crosslinkable polymer.

The content of the edible and ionically crosslinkable polymer in the aqueous solution containing the edible and ionically crosslinkable polymer is preferably 0.5% by mass or more and 5% by mass or less with respect to the entire aqueous solution.

The adding amount of the aqueous solution containing the edible and ionically crosslinkable polymer is preferably 50% by mass or more and 200% by mass or less with respect to the mass of the aqueous solution containing the particles obtained by the oil and/or fat solidification step.

Examples of the aqueous solution containing a cation include an aqueous solution that dissolves a salt containing a cation.

In the aqueous solution that dissolves a salt including a cation, the content of the salt is preferably 0.5% by mass or more and 5% by mass or less with respect to the entire aqueous solution.

The adding amount of the aqueous solution containing a cation added is preferably 50% by mass or more and 200% by mass or less with respect to the adding amount of the aqueous solution containing the edible and ionically crosslinkable polymer.

<Meat substitute>

The meat substitute contains a lean meat-like portion containing a protein, and a fat lump composition.

Here, as the fat lump composition, the above-described fat lump composition is applied.

(Lean meat-like portion)

The lean meat-like portion refers to a portion corresponding to a portion that looks like lean meat in a raw meat-like meat substitute.

The lean meat-like portion contains a protein. It preferably contains, as necessary, an oil and/or fat, a binding agent, and other additives.

- Protein -

The lean meat-like portion contains a protein.

The protein preferably includes at least one kind of a vegetable protein or an animal protein, and it more preferably includes a vegetable protein.

The vegetable protein is a protein collected from a plant.

The vegetable protein is not particularly limited as long as it is a protein collected from a plant. Examples of the origin of the vegetable protein include grains such as wheat, barley, oat, rice, and corn; beans such as soybean, pea, red bean, chickpea, lentil, broad bean, mung bean, and lupin; seeds such as almond, peanut, cashew nut, pistachio, hazelnut, Macadamia nut, linseed, sesame, rapeseed, cotton seed, safflower, and sunflower; tubers and roots such as potato, sweet potato, Japanese yam, Jerusalem artichoke, and cassava; vegetables such as asparagus, globe artichoke, cauliflower, broccoli, and green soybean; fruits such as banana, jackfruit, kiwifruit, coconut, avocado, and olive; mushrooms such as a mushroom, eryngii mushroom, shiitake mushroom, shimeji mushroom, and maitake mushroom; and algae such as chlorella, spirulina, euglena, laver, kelp, wakame seaweed, hijiki seaweed, agar weed, and mozuku seaweed. Among these, from the viewpoint of obtaining a meat substitute having an appearance and a food texture similar to those of the lump meat, the origin of the edible part protein is preferably at least one selected from the group consisting of wheat, soybean, pea, and rice, and more preferably at least one selected from the group consisting of soybean and wheat.

The vegetable protein may include one kind of plant-derived protein or may contain two or more kinds of plant-derived proteins.

The animal protein is a protein that is collected from an animal.

The animal protein is not particularly limited as long as it is a protein collected from an animal. Examples of the animal protein include collagen, gelatin, keratin, fibroin, sericin, casein, conchiolin, elastin, protamine, yolk protein, and egg white protein.

Only one kind of animal protein may be contained, or two or more kinds thereof may be contained.

From the viewpoint of obtaining a meat substitute having a food texture more similar to that of livestock meat, it is preferable that the protein has a muscle-like tissue.

Here, the muscle-like tissue refers to a tissue that has a structure similar to a bundle of fibers and can be split into fibers in a certain direction.

The lean meat of the livestock meat is derived from the muscle. In addition, the muscle is composed of a bundle of muscle fibers. As a result, the lean meat of the livestock meat has a structure like a bundle of fibers. In a case where the protein contained in the lean meat-like portion of the meat substitute according to the present disclosure has a muscle-like tissue, it is possible to produce a food texture that is obtained by the presence of muscle fibers, which is felt in a case where the livestock meat is eaten.

Examples of the method of allowing a protein to have a muscle-like tissue include a method of subjecting a protein (as necessary, water or the like may be added together with the protein) to extrusion forming with an extruder.

In a case where a protein is subjected to extrusion forming, the protein has a structure similar to a bundle of fibers aligned along the extrusion direction of the extruder and has a tissue that can be split into a fiber shape in the extrusion direction of the extruder.

The content of the protein is preferably 50% by mass or more and 100% by mass or less, more preferably 60% by mass or more and 95% by mass or less, and still more preferably 70% by mass or more and 90% by mass or less, with respect to the entire lean meat-like portion.

- Oil and/or fat -

The lean meat-like portion may contain an oil and/or fat.

Examples of the oil and/or fat include a vegetable oil and/or fat and an animal oil and/or fat.

Examples of the vegetable oil and/or fat include the same ones as those described in the description of the fat lump composition.

Examples of the animal oil and/or fat include bovine fat, porcine fat, lard, blubber, and fish oil.

- Binding agent -

The lean meat-like portion preferably contains a binding agent as necessary.

In a case where the lean meat-like portion contains a binding agent, the lean meat-like portion easily maintains a singly combined shape.

The binding agent is not particularly limited as long as it is edible and can maintain the shape of the lean meat-like portion.

Examples of the binding agent include a protein, thickening polysaccharides, and starch.

The protein that is used as the binding agent may be the same or different from the protein contained in the lean meat-like portion.

Examples of the protein that is used as the binding agent include a vegetable protein, an animal protein, and an enzyme.

Examples of the vegetable protein that is used as the binding agent include a protein of which the origin is wheat, soybean, rice, or the like.

Examples of the animal protein that is used as the binding agent include a milk protein and an egg white protein.

Examples of the enzyme include transglutaminase.

Examples of the thickening polysaccharides include carrageenan, xanthan gum, pectin, locust bean gum, curdlan, guar gum, tragacanth gum, Arabic gum, gellan gum, tamarind seed gum, cassia gum, tara gum, alginic acid, agar, glucomannan, soybean polysaccharide, gelatin, pullulan, psyllium, chitosan, methyl cellulose, hydroxypropyl methyl cellulose, hydroxyethyl cellulose, carboxymethyl cellulose, and dextrin.

Examples of the starch include wheat starch, cassava starch, rice starch, glutinous rice starch, corn starch, waxy corn starch, sago starch, potato starch, arrowroot starch, lotus root starch, mung bean starch, sweet potato starch, waxy potato starch, waxy cassava starch, and waxy wheat starch.

Here, it is preferable to use transglutaminase as the binding agent.

As the transglutaminase, a commercially available product can be used, examples of which include ACTIVA (registered trade name) series manufactured by Ajinomoto Co., Inc.

The content of the binding agent contained in the lean meat-like portion is preferably 0.01% by mass or more and 10% by mass or less with respect to the entire lean meat-like portion.

- Other additive -

It is preferable that the lean meat-like portion contains, as necessary, other additives other than protein, the oil and/or fat, and the binding agent.

Examples of other additives include water, a seasoning, an acidulant, a bittering agent, a spice, a sweetener, an antioxidant, a coloring agent, a color developing agent, a flavoring agent, a stabilizer, and a preservative.

The content of the other additives is preferably 0% by mass or more and 20% by mass or less.

<Production method for meat substitute>

It is preferable that a production method for the meat substitute includes a step (first step) of bringing a lean meat-like portion and a fat lump composition into contact with each other and a step (second step) of carrying out fixing using a binding agent.

(Production method for lean meat-like portion)

A production method for the meat substitute according to the present disclosure is preferably carried out as follows.

Examples of the procedure for producing the lean meat-like portion include the following procedure.

Procedure (1-1): A raw material of a lean meat-like portion, which contains at least a protein is extruded from an extruder, and the extruded raw material of the lean meat-like portion is colored red and then molded into a shape similar to a shape of the lean meat of the livestock meat.

Procedure (1-2): A commercially available soybean meat is colored with a red coloring agent, and the colored meat substitute is molded into a shape similar to a shape of the lean meat of the livestock meat.

Procedure (1-3): A raw material of a lean meat-like portion, which contains at least a protein and a coloring agent is extruded from an extruder, and the extruded red-colored lean meat-like portion is formed into a shape similar to a shape of the lean meat of the lump meat.

Procedure (1-4): A commercially available soybean meat that has been colored red is formed into a shape similar to a shape of the lean meat of the lump meat.

Hereinafter, the procedures of the procedure (1-1) to the procedure (1-4) will be described in detail.

- Procedure (1-1) -

· Raw material of lean meat-like portion

The raw material of the lean meat-like portion contains at least protein. However, it is preferable to contain water as well from the viewpoint of improving the efficiency of extruding the raw material of the lean meat-like portion from the extruder.

The raw material of the lean meat-like portion preferably contains 2 parts by mass or more and 6 parts by mass or more of water with respect to 10 parts by mass of protein.

· Extrusion conditions

The extruder is not particularly limited, and it is possible to use a known extruder such as a uniaxial screw extruder, a non-meshing different-direction rotating biaxial screw extruder, a meshing different-direction rotating biaxial screw extruder, a meshing co-rotating biaxial screw extruder, or the like.

Regarding the barrel temperature of the extruder, the temperature of the front half part of the barrel (a portion from the supply unit of the raw material of the lean meat-like portion to the center of the barrel) is preferably set to 60°C or higher and 100°C or lower, the temperature of the center of the barrel (the center of the length of the barrel in the axial direction) is preferably set to 90°C or higher and 170°C or lower, and the temperature of the rear half part of the barrel (a portion from the center of the barrel to the distal end of the barrel) is preferably set to 140°C or higher and 180°C or lower.

In the extruder, it is preferable that a die is mounted on the distal end of the barrel.

The die is preferably a die that makes it possible to obtain a sheet-shaped extruded product.

The gap (lip clearance) of the outlet of the die is preferably 1 mm or more and 10 mm or less.

The length of the die is preferably 30 mm or more and 100 mm or less.

The die is preferably a cooling die. Here, the cooled die refers to a die that is cooled, for example, by circulation of a cooling liquid (water, glycol, or the like).

In a case of using the cooling die, it is easy to suppress the swelling of the extruded raw material of the lean meat-like portion. Therefore, a lean meat-like portion produced by using the raw material of the lean meat-like portion, which has been extruded by using the cooling die, tends to be fibrous.

In a case of using the cooling die, the temperature of the outlet of the cooling die is preferably set to 90°C or higher and 120°C or lower.

· Forming

It is preferable that the extruded raw material of the lean meat-like portion is used by being cut as necessary.

From the viewpoint of obtaining a meat substitute having an appearance similar to that of the lump meat, it is preferable that, for example, the length of the extruded raw material of the lean meat-like portion in the extrusion direction is set to 10 mm or more and 50 mm, and the length in a direction orthogonal to the extrusion direction is set to 2 mm or more and 8 mm or less.

It is preferable that the extruded raw material of the lean meat-like portion is colored red by using a coloring agent.

The coloring agent is preferably an edible and red coloring agent.

Examples of the coloring agent include a natural red coloring agent from a beet.

It is preferable to add a binding agent to the extruded raw material of the lean meat-like portion, and a seasoning may be added as necessary.

The extruded raw material of the lean meat-like portion is collected in a lump shape to be molded into a shape similar to the shape of the lean meat of the livestock meat, whereby the lean meat-like portion of the meat substitute is produced.

From the viewpoint of obtaining a meat substitute having a food texture more similar to that of livestock meat, it is preferable to align the respective extrusion directions of the extruded raw material of the lean meat-like portion to be directions close to the same direction in a case of collecting the extruded raw material of the lean meat-like portion in a lump shape.

- Procedure (1-2) -

The procedure for producing the lean meat-like portion may be a procedure in which a commercially available soybean meat is colored with a red coloring agent, and the colored meat substitute is molded into a shape similar to a shape of the lean meat of the livestock meat.

The soybean meat refers to a food material that is artificially produced by using a raw material containing a soybean-derived vegetable protein and has a food texture similar to that of the livestock meat.

It is preferable that the soybean meat is used by being cut as necessary.

From the viewpoint of obtaining a meat substitute having an appearance similar to that of the livestock meat, it is preferable that the soybean meat has, for example, a vertical width of 10 mm or more and 50 mm, a horizontal width of 2 mm or more and 8 mm or less, and a thickness of 1 mm or more and 5 mm or less.

In addition, a commercially available soybean meat is generally obtained by extruding a raw material containing a soybean-derived plant protein from an extruder and swelling it. Therefore, a commercially available soybean meat generally has a muscle-like tissue. Therefore, in a case of adjusting the dimensions of the soybean meat, it is preferable to adjust the dimensions by splitting the tissue along a structure similar to a bundle of fibers included in the muscle-like tissue of the soybean meat.

It is preferable that the soybean meat is colored red by using a coloring agent.

Examples of the coloring agent include the same coloring agents as those described in the procedure (1-1).

In addition, It is preferable to add a binding agent to the soybean meat, and a seasoning may be added as necessary.

The soybean meat is collected in a lump shape to be molded into a shape similar to the shape of the lean meat of the livestock meat, whereby the lean meat-like portion of the meat substitute is produced.

From the viewpoint of obtaining a meat substitute having a food texture more similar to that of livestock meat, it is preferable that the respective directions of structures similar to fiber bundles included in the muscle-like tissue of the soybean meat are aligned to be directions close to the same direction in a case where the soybean meat is collected in a lump shape.

- Procedure (1-3) -

It is preferable to produce the lean meat-like portion in the same manner as in the procedure (1-1), except that a coloring agent is added to the raw material of the lean meat-like portion before extrusion forming instead of adding the coloring agent to the raw material of the lean meat-like portion after extrusion forming.

- Procedure (1-4) -

It is preferable to produce the lean meat-like portion in the same manner as in the procedure (1-2), except that a soybean meat that has been colored red in advance is used instead of coloring a commercially available soybean meat with a coloring agent.

(First step)

A first step is a step of bringing a lean meat-like portion and a fat lump composition into contact with each other.

A method of bringing the lean meat-like portion and the fat lump composition with each other is not particularly limited. However, for example, in a case of producing a meat substitute having an appearance similar to that of the steak, it is preferable that the lean meat-like portion is molded into a shape similar to the lean meat, the fat lump composition is molded into a shape similar to the fatty meat of the steak, and then the lean meat-like portion and the fat lump composition are brought into contact with each other.

(Second step)

A second step is a step of fixing, by using a binding agent, a contact body between the lean meat-like portion and the fat lump composition, which is obtained in the first step.

Examples of the method of fixing the contact body include a method of spraying a binding agent onto the entire contact body and then allowing it to stand.

Here, as the binding agent, those described above can be applied; however, an enzyme is preferable, and transglutaminase is more preferable.

It is preferable that the meat substitute is produced through the above steps.

Examples

Hereinafter, Examples will be described; however, the present invention is not limited to these Examples. It is noted that in the following description, "parts" and "%" are all based on mass unless otherwise specified.

<Example 1>

(1) Liquid droplet forming step

A water phase and an oil phase were prepared as follows.

Water phase: 99.5 parts by mass of tap water and 0.5 parts by mass of RYOTO Sugar Ester M-1695 (manufactured by Mitsubishi Chemical Corporation) as a surfactant were weighed so that the total thereof was 5 kg, and the resultant mixture was stirred for 30 minutes with Three-One Motor (manufactured by Shinto Scientific Co., Ltd.) and completely dissolved.

Oil phase: 1 kg of coconut oil (manufactured by COCOWELL CORPORATION, product name: Organic Premium Coconut Oil (M041)) was weighed as an oil and/or fat.

The membrane emulsification was carried out using a pipe-shaped SPG membrane (manufactured by SPG Technology Co., Ltd., pore diameter: 50 $\mu$m) with the water phase as a continuous phase and the oil phase as a dispersed phase. Specifically, a pipe-shaped SPG membrane was inserted and disposed in a tubular container, and then, the water phase was allowed to flow into the inside (the internal pipe line) of the pipe-shaped SPG membrane at a flow rate of 50 mL/min from one end of the container toward the other end of thereof, and the oil phase was allowed to flow to the outside (the outer pipe line (a flow channel between the container and the SPG membrane)) of the pipe-shaped SPG membrane at a flow rate of 10 mL/min.

As a result, an aqueous solution containing liquid droplets containing an oil and/or fat (hereinafter, also referred to as a liquid droplet dispersion liquid) was obtained. It is noted that the particle diameter of the liquid droplet containing the oil and/or fat was 190 $\mu$m, and the CV value thereof was 19%.

Here, the particle diameter and the CV value of the liquid droplets containing the oil and/or fat were respectively measured in the same manner as in the measurements of the average particle diameter of the granular bodies and the CV value of the particle diameter of the granular bodies described above.

(2) Oil and/or fat solidification step

The liquid droplet dispersion liquid was added to the separatory funnel and then allowed to stand for 30 minutes. Since the liquid droplet dispersion liquid was separated into a phase containing liquid droplets containing the oil and/or fat and a water phase, the water phase was discharged from the separatory funnel, and the phase containing liquid droplets containing the oil and/or fat was recovered.

The recovered phase containing liquid droplets containing the oil and/or fat was allowed to stand for 1 hour in a refrigerator having an internal temperature of 5°C and cooled to solidify the oil and/or fat, thereby obtaining an aqueous solution containing particles (hereinafter, also referred to as a particle-containing liquid).

(3) Crosslinking step

1 part by mass of sodium alginate (manufactured by KIMICA Corporation, KIMICA ALGIN I-1) as an edible and ionically crosslinkable polymer, 0.5 parts by mass of RYOTO Sugar Ester M-1695 (manufactured by Mitsubishi Chemical Corporation) as a surfactant, and 98.5 parts by mass of tap water were mixed to obtain an aqueous solution containing an edible and ionically crosslinkable polymer (hereinafter, also referred to as an ionically crosslinkable polymer solution).

100 parts by mass of the particle-containing liquid was added thereto with respect to 100 parts by mass of the ionically crosslinkable polymer solution, the resultant mixture was slowly stirred with a stirrer (Three-One Motor, manufactured by Shinto Scientific Co., Ltd.), and the obtained solution (referred to as a particle-containing liquid 2) was poured into a stainless steel pad so that the thickness of the solution was set to 3 mm.

As a salt containing a cation, 1 part by mass of calcium chloride (manufactured by FUJIFILM Wako Pure Chemical Corporation, food additive grade) was dissolved in 99 parts by mass of tap water to prepare an aqueous solution containing a cation. An aqueous solution containing the same mass of the cation as in the particle-containing liquid 2 contained in the stainless steel pad was poured into the stainless pad and allowed to stand for 2 hours in a refrigerator having an internal temperature of 5°C, and the edible and ionically crosslinkable polymer was crosslinked (gelated) to obtain a crude fat lump composition.

The crude fat lump composition was washed with tap water, and then the moisture on the surface thereof was wiped off with Kimtowel to obtain a fat lump composition.

<Examples 2 to 4>

A fat lump composition was obtained in the same manner as in Example 1, except that in the (1) liquid droplet forming step, the pore diameter of the pipe-shaped SPG membrane and the flow rates of the water phase and the oil phase were changed as shown in Table 1.

<Examples 5 and 7>

A fat lump composition was obtained in the same manner as in Example 1, except that the kind of the surfactant used in the (1) liquid droplet forming step and the (3) crosslinking step was changed as shown in Table 1.

<Examples 8 to 11>

A fat lump composition was obtained in the same manner as in Example 1, except that in the (3) crosslinking step, the volume of the gel with respect to the volume of the granular body was adjusted as shown in Table 1 and Table 2 by changing the adding amount of the ionically crosslinkable polymer solution as follows.

Example 8: 7 parts by mass. This example is not part of the present invention.
Example 9: 21 parts by mass
Example 10: 250 parts by mass
Example 11: 400 parts by mass. This example is not part of the present invention.

<Examples 12 and 13>

A fat lump composition was obtained in the same manner as in Example 1, except that in the (1) liquid droplet forming step, the flow rates of the water phase and the oil phase were as shown in Table 2.

<Example 14>

A fat lump composition was obtained in the same manner as in Example 1, except that after preparing the water phase and the oil phase in the (1) liquid droplet forming step, the water phase and the oil phase were added to a 50 mL glass vial (manufactured by KENIS LIMITED), and stirring was carried out at a stirring speed of 400 revolutions per minutes (rpm) for 30 seconds using a stirring bar (diameter: 8 mm, length: 30 mm, manufactured by AS ONE Corporation), thereby obtaining a liquid droplet dispersion liquid.

<Examples 15 and 16>

A fat lump composition was obtained in the same manner as in Example 1, except that the adding amount of the surfactant used in the (1) liquid droplet forming step and the (3) crosslinking step was as follows.

(Adding amount of surfactant of Example 15)

(1) Liquid droplet forming step: 0.1 parts by mass
(3) Crosslinking step: 0.1 parts by mass

(Adding amount of surfactant of Example 16)

(1) Liquid droplet forming step: 2 parts by mass
(3) Crosslinking step: 2 parts by mass

<Examples 17 to 20>

A fat lump composition was obtained in the same manner as in Example 1, except that in the (1) liquid droplet forming step, the oil and/or fat to be used as the oil phase was as shown in Table 2.
It is noted that the details of the oil and/or fat are as follows.

· Olive oil: Manufactured by FUJIFILM Wako Pure Chemical Corporation
· Palm oil: Manufactured by Fujifilm Wako Pure Chemical Corporation
· Canola oil: Manufactured by Nisshin OilliO Group, Ltd., product name: Nisshin Canola Oil
· Oleic acid: Manufactured by Fujifilm Wako Pure Chemical Corporation

<Examples 21 and 22>

A fat lump composition was obtained in the same manner as in Example 1, except that in the (3) crosslinking step, the ionically crosslinkable polymer solution was prepared as follows.

(Procedure for preparing ionically crosslinkable polymer solution of Example 21)

0.2 part by mass of sodium alginate (manufactured by KIMICA Corporation, KIMICA ALGIN I-1) as an edible and ionically crosslinkable polymer, 0.5 parts by mass of RYOTO Sugar Ester M-1695 (manufactured by Mitsubishi Chemical Corporation) as a surfactant, and 99.3 parts by mass of tap water were mixed to prepare an ionically crosslinkable polymer solution.

(Procedure for preparing ionically crosslinkable polymer solution of Example 22)

3 parts by mass of sodium alginate (manufactured by KIMICA Corporation, KIMICA ALGIN I-1) as an edible and ionically crosslinkable polymer, 0.5 parts by mass of RYOTO Sugar Ester M-1695 (manufactured by Mitsubishi Chemical Corporation) as a surfactant, and 96.5 parts by mass of tap water were mixed to prepare an ionically crosslinkable polymer solution.

<Example 23>

A fat lump composition was obtained in the same manner as in Example 1, except that in the (1) liquid droplet forming step, the emulsion was such that the oil phase was prepared as follows.
Oil phase: 20 parts by mass of an aqueous solution containing 20% by mass of HI-ME (manufactured by Ajinomoto Co., Inc.) with respect to the entire solution was added to 80 parts by mass of coconut oil, which is an oil and/or fat, to prepare a mixed solution having a total weight of 1 kg. Then, this mixed solution was stirred and emulsified for 30 minutes with Three-One Motor (manufactured by Shinto Scientific Co., Ltd.) to obtain an emulsion.

<Example 24>

A fat lump composition was obtained in the same manner as in Example 1, except that in the (3) crosslinking step, the kind of the edible and ionically crosslinkable polymer to be added was LM Pectin (SLENDID (registered trade name) speciality pectin 100J, manufactured by Sansho Co., Ltd.).

<Comparative Example 1>

A fat lump composition was obtained according to the same procedure as in Example 1 of JP6446473B.

<Comparative Example 2>

A fat lump composition was obtained according to the same procedure as in Example 1 of JP6265121B.

<Comparative Example 3>

A fat lump composition was obtained in the same manner as in Example 1, except that in the (1) liquid droplet forming step, the oil and/or fat to be used as the oil phase was as shown in Table 3.
It is noted that the details of the oil and/or fat are as follows.
· Castor oil: Manufactured by Fujifilm Wako Pure Chemical Corporation

<Comparative Examples 4 and 5>

A fat lump composition was obtained in the same manner as in Example 1, except that in the (1) liquid droplet forming step, the pore diameter of the pipe-shaped SPG membrane and the flow rates of the water phase and the oil phase were as shown in Table 3.

<Comparative Example 6>

A fat lump composition was obtained in the same manner as in Example 1, except that in the (3) crosslinking step, gelatin was used instead of the sodium alginate, and tap water was poured into the stainless steel pad instead of the aqueous solution containing a cation.

<Various measurements>

Regarding the fat lump compositions obtained in each example, "thickness", "average particle diameter of granular body", "CV value of particle diameter of granular body", "volume of gel with respect to volume of granular body", "liquid leakage amount ratio during heating" and "liquid leakage amount ratio during pressurization" were respectively measured according to the methods described above.

It is noted that "liquid leakage amount ratio during pressurization" indicates the measurement result of the "liquid leakage amount ratio - 2" during pressurization.

[Table 1]

| | | | | | Emulsification condition | | | | | | | | | |
| | Surfactant | HSP distance | Oil and fat (melting point) | SPG membrane pore diameter (μm) | Flow rate of water phase (mL/min) | Flow rate of oil phase (mL/min) | Other emulsification methods | Concentration of sodium alginate (part by mass) | Thickness of simulated structure of fat lump (mm) | Average particle diameter of granular bodies (μm) | CV value of particle diameter (%) | Volume of gel with respire to volume of granular body (%) | Liquid leakage amount ratio during heating (%) | Liquid leakage amount ratio during pressurization (%) |
| | Preparation condition | | | | | | | | | Evaluation result | | | | |
|---|---|---|---|---|---|---|---|---|---|---|---|---|---|---|
| Example 1 | RYOTO Sugar Ester M-1695 (0.5 parts by mass) | 8.6 | Coconut oil (24°C) | 50 | 50 | 10 | - | 1 | 3 | 190 | 19 | 101 | 26 | 59 |
| Example 2 | RYOTO Sugar Ester M-1695 (0.5 parts by mass) | 8.6 | Coconut oil (24°C) | 50 | 50 | 40 | - | 1 | 3 | 350 | 26 | 99 | 37 | 45 |
| Example 3 | RYOTO Sugar Ester M-1695 (0.5 parts by mass) | 8.6 | Coconut oil (24°C) | 30 | 30 | 7 | - | 1 | 3 | 124 | 17 | 99 | 22 | 55 |
| Example 4 | RYOTO Sugar Ester M-1695 (0.5 parts by mass) | 8.6 | Coconut oil (24°C) | 10 | 10 | 2 | - | 1 | 3 | 55 | 19 | 100 | 17 | 47 |
| Example 5 | RYOTO Sugar Ester M-1695 (0.5 parts by mass) | 8.8 | Coconut oil (24°C) | 50 | 50 | 10 | - | 1 | 3 | 187 | 18 | 101 | 28 | 57 |
| Example 6 | RYOTO Sugar Ester L-10D (0.5 parts by mass) | 13.8 | Coconut oil (24°C) | 50 | 50 | 10 | - | 1 | 3 | 194 | 17 | 100 | 55 | 30 |
| Example 7 | Tween 20 (0.5 parts by mass) | 17.6 | Coconut oil (24°C) | 50 | 50 | 10 | - | 1 | 3 | 200 | 19 | 101 | 62 | 25 |
| Example 8 | RYOTO Sugar Ester M-1695 (0.5 parts by mass) | 8.6 | Coconut oil (24°C) | 50 | 50 | 10 | - | 7 | 3 | 190 | 19 | 6 | 60 | 28 |
| Example 9 | RYOTO Sugar Ester M-1695 (0.5 parts by mass) | 8.6 | Coconut oil (24°C) | 50 | 50 | 10 | - | 21 | 3 | 190 | 19 | 22 | 42 | 35 |
| Example 10 | RYOTO Sugar Ester M-1695 (0.5 parts by mass) | 8.6 | Coconut oil (24°C) | 50 | 50 | 10 | - | 250 | 3 | 190 | 19 | 245 | 18 | 45 |

EP 4 378 318 B1

[Table 2]

| | Preparation condition | | | | | | | | Evaluation result | | | | | |
| --- | --- | --- | --- | --- | --- | --- | --- | --- | --- | --- | --- | --- | --- | --- |
| | Surfactant | HSP distance | Oil and fat (melting point) | Emulsification condition | | | | Concentration of sodium alginate (part by mass) | Thickness of simulated structure of fat lump (mm) | Average particle diameter of granular bodies (µm) | CV value of particle diameter (%) | Volume of gel with respire to volume of granular body (%) | Liquid leakage amount ratio during heating (%) | Liquid leakage amount ratio during pressurization (%) |
| | | | | SPG membrane pore diameter (µm) | Flow rate of water phase (mL/min) | Flow rate of oil phase (mL/min) | Other emulsification methods | | | | | | | |
| Example 11 | RYOTO Sugar Ester M-1695 (0.5 parts by mass) | 8.6 | Coconut oil (24°C) | 50 | 50 | 10 | - | 400 | 3 | 190 | 19 | 405 | 14 | 32 |
| Example 12 | RYOTO Sugar Ester M-1695 (0.5 parts by mass) | 8.6 | Coconut oil (24°C) | 50 | 100 | 20 | - | 1 | 3 | 240 | 26 | 100 | 33 | 53 |
| Example 13 | RYOTO Sugar Ester M-1695 (0.5 parts by mass) | 8.6 | Coconut oil (24°C) | 50 | 400 | 80 | - | 1 | 3 | 280 | 36 | 101 | 37 | 48 |
| Example 14 | RYOTO Sugar Ester M-1695 (0.5 parts by mass) | 8.6 | Coconut oil (24°C) | - | - | - | Stirring emulsification with magnetic stirrer 400 rpm × 30 sec | 1 | 3 | 140 | 52 | 102 | 34 | 35 |
| Example 15 | RYOTO Sugar Ester M-1695 (0.1 parts by mass) | 8.6 | Coconut oil (24°C) | 50 | 50 | 10 | - | 1 | 3 | 210 | 24 | 101 | 30 | 46 |
| Example 16 | RYOTO Sugar Ester M-1695 (2 parts by mass) | 8.6 | Coconut oil (24°C) | 50 | 50 | 10 | - | 1 | 3 | 188 | 16 | 101 | 22 | 61 |
| Example 17 | RYOTO Sugar Ester M-1695 (0.5 parts by mass) | 8.6 | Olive oil (6°C) | 50 | 50 | 10 | - | 1 | 3 | 150 | 18 | 100 | 28 | 55 |
| Example 18 | RYOTO Sugar Ester M-1695 (0.5 parts by mass) | 8.6 | Palm oil (29°C) | 50 | 50 | 10 | - | 1 | 3 | 177 | 21 | 101 | 27 | 56 |
| Example 19 | RYOTO Sugar Ester M-1695 (0.5 parts by mass) | 8.6 | Canola oil (12°C) | 50 | 50 | 10 | - | 1 | 3 | 190 | 21 | 99 | 28 | 57 |
| Example 20 | RYOTO Sugar Ester M-1695 (0.5 parts by mass) | 8.6 | Oleic acid (16°C) | 50 | 50 | 10 | - | 1 | 3 | 212 | 20 | 101 | 29 | 58 |

22

[Table 3]

| | | | | Preparation condition | | | | | | Evaluation result | | | | |
| | | | | | Emulsification condition | | | | | | | | | |
| | Surfactant | HSP distance | Oil and fat (melting point) | SPG membrane pore diameter (μm) | Flow rate of water phase (mL/min) | Flow rate of oil phase (mL/min) | Other emulsification methods | Concentration of sodium alginate (part by mass) | Thickness of simulated structure of fat lump (mm) | Average particle diameter of granular bodies (μm) | CV value of particle diameter (%) | Volume of gel with respect to volume of granular body (%) | Liquid leakage amount ratio during heating (%) | Liquid leakage amount ratio during pressurization (%) |
|---|---|---|---|---|---|---|---|---|---|---|---|---|---|---|
| Example 21 | RYOTO Sugar Ester M-1695 (0.5 parts by mass) | 8.6 | Coconut oil (24°C) | 50 | 50 | 10 | - | 0.2 | 3 | 190 | 19 | 99 | 39 | 42 |
| Example 22 | RYOTO Sugar Ester M-1695 (0.5 parts by mass) | 8.6 | Coconut oil (24°C) | 50 | 50 | 10 | - | 3 | 3 | 190 | 19 | 100 | 18 | 64 |
| Example 23 | RYOTO Sugar Ester M-1695 (0.5 parts by mass) | 8.6 | A liquid obtained by emulsifying, in coconut oil, 20% of HI-ME (manufactured by Ajinomoto Co., Inc.) in water | 50 | 50 | 10 | - | 3 | 3 | 220 | 27 | 100 | 30 | 47 |
| Example 24 | RYOTO Sugar Ester M-1695 (0.5 parts by mass) | 8.6 | Coconut oil (24°C) | 50 | 50 | 10 | - | 1 (LM Pectin) | 3 | 190 | 19 | 101 | 24 | 61 |
| Comparative Example 1 | - | - | Coconut oil (24°C) | - | - | - | Hand mixer 1,000 rpm, 20 sec | - | 3 | (unmeasurable) | - | 260 | 37 | 12 |
| Comparative Example 2 | - | - | Coconut oil (24°C) | - | - | - | Propeller stirring 600 rpm, 1 min | - | 3 | (unmeasurable) | - | 151 | 5 | 20 |
| Comparative Example 3 | RYOTO Sugar Ester M-1695 (0.5 parts by mass) | 8.6 | Castor oil (-10°C) | 50 | 50 | 10 | - | 1 | 3 | 185 | 18 | 101 | 75 | 12 |
| Comparative Example 4 | RYOTO Sugar Ester M-1695 (0.5 parts by mass) | 8.6 | Coconut oil (24°C) | 5 | 20 | 8 | - | 1 | 3 | 42 | 27 | 100 | 15 | 24 |
| Comparative Example 5 | RYOTO Sugar Ester M-1695 (0.5 parts by mass) | 8.6 | Coconut oil (24°C) | 5 | 5 | 1 | - | 1 | 3 | 26 | 24 | 102 | 13 | 24 |
| Comparative Example 6 | RYOTO Sugar Ester M-1695 (0.5 parts by mass) | 8.6 | Coconut oil (24°C) | 50 | 50 | 10 | - | 1 (gelatin) | 3 | 193 | 19 | 101 | 82 | 4 |

The terms in the table will be described below.

· Numerical value in parentheses, which is described next to kind of surfactant

This indicates the adding amount of the surfactant in the (1) liquid droplet forming step and the (3) crosslinking step.

For example, it is described, in Example 1, as "RYOTO Sugar Ester M-1695 (0.5 parts by mass)". Regarding this, the amount of RYOTO Sugar Ester M-1695 added in the (1) liquid droplet forming step is 0.5 parts by mass, and the amount of RYOTO Sugar Ester M-1695 added in the (3) crosslinking step is 0.5 parts by mass.

· In regard to concentration of sodium alginate

The adding amount of sodium alginate in the (3) crosslinking step is shown. It is noted that the kind of the polymer is also shown regarding an example in which sodium alginate is replaced with a polymer (specifically, LM pectin or gelatin) other than the sodium alginate.

· Other emulsification methods

An outline of emulsification conditions is shown in a case where the liquid droplet dispersion liquid is obtained by a method other than the membrane emulsification in the (1) liquid droplet forming step.

<Example 101>

A meat substitute was prepared according to the following procedure.

(Production of raw material of lean meat-like portion)

Showa Fresh RF (manufactured by Showa Sangyo Co., Ltd., defatted soybean powder) and PRO-GEL 65 (manufactured by TORIGOE CO., LTD., wheat gluten powder) were mixed at a mass ratio (defatted soybean powder/-wheat gluten powder) of 7:3 to obtain a raw material precursor of the lean meat-like portion. At a discharge part of a biaxial screw extruder which had been set so that the screw length was 1,100 mm and the maximum temperature of the screw tip part was 155°C, a cooling die (die width: 100 mm, lip clearance: 3 mm) was attached so that the outlet temperature was 105°C. The raw material precursor of the lean meat-like portion was introduced into the extruder at 250 g/min, and the raw material precursor of the lean meat-like portion was extruded while adding water of 50% by mass with respect to the entire raw material precursor of the lean meat-like portion to the extruder, whereby a raw material of the lean meat-like portion was obtained.

(Preparation of meat substitute)

300 g of the raw material of the lean meat-like portion was boiled in 3 L of boiling water for 10 minutes, and the water was drained off. Then, it was torn into a strip shape having a thickness of about 5 mm, seasoned with salt and pepper and HI-ME (manufactured by Ajinomoto Co., Inc.), and flavored with nutmeg to obtain a strip-shaped protein 1. 30 g of SUPER CARD (transglutaminase manufactured by Ajinomoto Co., Inc.) and 30 g of FUJIPRO FR (soybean powder manufactured by FUJI OIL CO., LTD.) were added to the strip-shaped protein 1 cooled to 4°C and mixed to be uniform, whereby a meat substitute precursor 1 was obtained. The fat lump composition obtained in Example 1 was cut in a strip shape having a thickness of about 2 mm to obtain a strip-shaped fat lump composition 1. The strip-shaped fat lump composition 1 cooled to 4°C was added while arranging and overlaying the meat substitute precursor 1 cooled to 4°C so that the fiber directions (the extrusion directions of the raw material of the lean meat-like portion) were aligned, and the shape was adjusted to be similar to the block meat. In this case, the strip-shaped fat lump composition 1 was allowed to make the surface of the steak-like meat substitute similar to the marbled meat. Then, the forming was carried out by continuously applying pressure at 4°C for 2 hours to obtain a crude meat substitute. The crude meat substitute was cut in a direction perpendicular to the fiber direction (the extrusion direction of the raw materials of the lean meat-like portion) of the strip-shaped fat lump composition 1 in the crude meat substitute, whereby a steak-like meat substitute having a thickness of 25 mm was obtained.

<Evaluation>

The obtained meat substitute was subjected to heat cooking on a hot plate at 200°C. As a result of eating the meat substitute after heat cooking, the release of the oily component from the fat lump composition in a case of chewing the meat substitute was sufficient, and the meat substitute had a food texture similar to that of the livestock meat.

From the above results, it can be seen that the fat lump composition of the present Example is a fat lump composition that has a large liquid leakage amount ratio during pressurization and has a large release amount of the oily component in a case of being chewed, as compared with the fat lump compositions of Comparative Examples.

## Claims

1. A fat lump composition comprising:

   a granular body that contains an oil and/or fat having a melting point of 0.1°C or higher;
   an edible and ionically crosslinkable polymer that is crosslinked with a cation; and
   a surfactant,
   wherein an average particle diameter of the granular bodies is 50 $\mu$m or more and 500 $\mu$m or less;
   wherein an HSP distance between the ionically crosslinkable polymer and a hydrophilic moiety of the surfactant is 10 or less, wherein the HSP distance is acquired as a registered value or an estimated value in HSPiP 4th Edition, version 4.0.04, which is commercially available software;
   wherein the fat lump composition contains a gel containing the ionically crosslinkable polymer, and
   wherein a volume of the gel is 10% or more and 300% or less with respect to a volume of the granular body.

2. The fat lump composition according to claim 1, wherein in a case where a fat lump composition having a thickness of 2 mm, a ratio of vertical length:lateral length = 1:1, and a weight of 2 g is heated for 5 minutes on a hot plate at 90°C and subsequently, pressurized from a surface of the fat lump composition after heating at a pressure of 300 g/cm$^2$ for 1 minute in a thickness direction, an amount of a liquid released from the fat lump composition after heating is 30% by mass or more with respect to an amount of the oil and/or fat contained in the fat lump composition before heating, in a case where the fat lump composition after heating is pressurized.

3. The fat lump composition according to claim 1 or 2,
   wherein a CV value of a particle diameter of the granular body is 30% or less, wherein the CV value of the particle diameter is a value obtained according to:

   CV value (%) of particle diameter = (standard deviation of equivalent circle diameter of granular body/average particle diameter of granular body) $\times$ 100.

4. The fat lump composition according to any one of claims 1 to 3, wherein a melting point of the oil and/or fat is 1°C or higher and 30°C or lower.

5. The fat lump composition according to any one of claims 1 to 4, wherein the oil and/or fat is at least one selected from coconut oil, olive oil, palm oil, canola oil, or oleic acid.

6. The fat lump composition according to any one of claims 1 to 5, wherein the granular body contains water.

7. The fat lump composition according to any one of claims 1 to 6, wherein the fat lump composition has a sheet shape and has a thickness of 0.5 mm or more

8. A meat substitute comprising:

   a lean meat-like portion containing a protein; and
   the fat lump composition according to any one of claims 1 to 7.

## Patentansprüche

1. Fettklumpenzusammensetzung, umfassend:

   einen granularen Körper, der ein Öl und/oder Fett mit einem Schmelzpunkt von 0,1 °C oder höher enthält;
   ein essbares und ionisch vernetzbares Polymer, das mit einem Kation vernetzt ist; und

ein Tensid,

wobei ein mittlerer Teilchendurchmesser der granularen Körper 50 μm oder mehr und 500 μm oder weniger beträgt;

wobei ein HSP-Abstand zwischen dem ionisch vernetzbaren Polymer und einem hydrophilen Teil des Tensids 10 oder weniger beträgt, wobei der HSP-Abstand als ein registrierter Wert oder ein geschätzter Wert in HSPiP 4. Auflage, Version 4.0.04, die kommerziell erhältliche Software ist, erfasst wird;

wobei die Fettklumpenzusammensetzung ein Gel enthält, das das ionisch vernetzbare Polymer enthält, und wobei ein Volumen des Gels 10 % oder mehr und 300 % oder weniger in Bezug auf ein Volumen des granularen Körpers beträgt.

2. Fettklumpenzusammensetzung nach Anspruch 1,

wobei in einem Fall, in dem eine Fettklumpenzusammensetzung mit einer Dicke von 2 mm, einem Verhältnis von vertikaler Länge:seitlicher Länge = 1:1 und einem Gewicht von 2 g für 5 Minuten auf einer heißen Platte bei 90 °C erwärmt wird und nachfolgend von einer Fläche der Fettklumpenzusammensetzung nach Erwärmen in einer Dickenrichtung bei einem Druck von 300 g/cm$^2$ für 1 Minute druckbeaufschlagt wird, eine Menge einer Flüssigkeit, die aus der Fettklumpenzusammensetzung nach Erwärmen freigesetzt wird, 30 Massen-% oder mehr in Bezug auf eine Menge des Öls und/oder Fettes, das in der Fettklumpenzusammensetzung vor Erwärmen enthalten war, beträgt, in einem Fall, in dem die Fettklumpenzusammensetzung nach Erwärmen druckbeaufschlagt wird.

3. Fettklumpenzusammensetzung nach Anspruch 1 oder 2,

wobei ein CV-Wert eines Teilchendurchmessers des granularen Körpers 30 % oder weniger beträgt, wobei der CV-Wert des Teilchendurchmessers ein Wert ist, der erhalten wird gemäß:

CV-Wert (%) von Teilchendurchmesser = (Standardabweichung von äquivalentem Kreisdurchmesser von granularem Körper/mittleren Teilchendurchmesser von granularem Körper) × 100.

4. Fettklumpenzusammensetzung nach einem der Ansprüche 1 bis 3,

wobei ein Schmelzpunkt des Öls und/oder Fetts 1 °C oder höher und 30 °C oder niedriger ist.

5. Fettklumpenzusammensetzung nach einem der Ansprüche 1 bis 4,

wobei das Öl und/oder Fett mindestens eines ist, das aus Kokosnussöl, Olivenöl, Palmöl, Rapsöl und Ölsäure ausgewählt wird.

6. Fettklumpenzusammensetzung nach einem der Ansprüche 1 bis 5,

wobei der granulare Körper Wasser enthält.

7. Fettklumpenzusammensetzung nach einem der Ansprüche 1 bis 6,

wobei die Fettklumpenzusammensetzung eine Blattform aufweist und eine Dicke von 0,5 mm oder mehr aufweist.

8. Fleischersatz, umfassend:

einen magerfleischartigen Abschnitt, der ein Protein enthält; und

die Fettklumpenzusammensetzung nach einem der Ansprüche 1 bis 7.

**Revendications**

1. Composition de grumeau de graisse comprenant :

un corps granulaire qui contient une huile et/ou une graisse ayant un point de fusion de 0,1 °C ou plus ;

un polymère comestible et ioniquement réticulable qui est réticulé avec un cation ; et

un tensioactif,

dans laquelle un diamètre moyen de particules des corps granulaires est de 50 μm ou plus et de 500 μm ou moins ;

dans laquelle une distance HSP entre le polymère ioniquement réticulable et une fraction hydrophile du tensioactif est de 10 ou moins, dans lequel la distance HSP est acquise comme une valeur enregistrée ou une valeur estimée dans HSPiP 4th Edition, version 4.0.04, qui est un logiciel disponible dans le commerce ;
dans laquelle la composition de grumeau de graisse contient un gel contenant le polymère ioniquement réticulable, et
dans laquelle un volume du gel est de 10 % ou plus et de 300 % ou moins par rapport à un volume du corps granulaire.

2.   Composition de grumeau de graisse selon la revendication 1,
dans laquelle dans un cas où une composition de grumeau de graisse ayant une épaisseur de 2 mm, un rapport de longueur verticale : longueur latérale = 1 : 1 et un poids de 2 g est chauffée pendant 5 minutes sur une plaque chauffante à 90 °C et ensuite pressurisée à partir d'une surface de la composition de grumeau de graisse après le chauffage à une pression de 300 g/cm$^2$ pendant 1 minute dans une direction d'épaisseur, une quantité d'un liquide libérée de la composition de grumeau de graisse après le chauffage est de 30 % en masse ou plus par rapport à une quantité de l'huile et/ou de la graisse contenue dans la composition de grumeau de graisse avant le chauffage, dans un cas où la composition de grumeau de graisse après le chauffage est pressurisée.

3.   Composition de grumeau de graisse selon la revendication 1 ou la revendication 2, dans laquelle une valeur de CV d'un diamètre de particule du corps granulaire est de 30 % ou moins, dans lequel la valeur de CV du diamètre de particule est une valeur obtenue en fonction de :

valeur de CV (%) de diamètre de particule = (écart-type de diamètre de cercle équivalent de corps granulaire/diamètre moyen de particule de corps granulaire) $\times$ 100.

4.   Composition de grumeau de graisse selon l'une quelconque des revendications 1 à 3, dans laquelle un point de fusion de l'huile et/ou de la graisse est de 1 °C ou plus et de 30 °C ou moins.

5.   Composition de grumeau de graisse selon l'une quelconque des revendications 1 à 4, dans laquelle l'huile et/ou la graisse est au moins l'une sélectionnée parmi l'huile de coco, l'huile d'olive, l'huile de palme, l'huile de colza ou l'acide oléique.

6.   Composition de grumeau de graisse selon l'une quelconque des revendications 1 à 5, dans lequel le corps granulaire contient d'eau.

7.   Composition de grumeau de graisse selon l'une quelconque des revendications 1 à 6, dans lequel la composition de grumeau de graisse a une forme de feuille et a une épaisseur de 0,5 mm ou plus.

8.   Substitut de viande comprenant :

une portion en forme de viande maigre contenant une protéine ; et
la composition de grumeau de graisse selon l'une quelconque des revendications 1 à 7.

**REFERENCES CITED IN THE DESCRIPTION**

**Patent documents cited in the description**

- JP 6446473 B
- JP 62146584 A
- JP S62146584 A
- JP 6265121 B
- JP 7502172 A
- JP H07502172 A
- JP 52057357 A
- JP S52057357 A
- US 20150099053 A1
- EP 4252548 A1
- US 20120183663 A1

**Non-patent literature cited in the description**

- Standard Methods for the Analysis of Fats, Oils, and Related Materials 2.2.4.2. Japan Oil Chemists' Society, 1996
- **C. M. HANSEN**. solubility parameters: a user's handbook. CEC press, 2007